**Europäisches Patentamt**

**European Patent Office**

**Office européen des brevets**

(19)

(11) Numéro de publication: **0 214 060 B1**

(12) **FASCICULE DE BREVET EUROPEEN**

(45) Date de publication du fascicule du brevet:
28.06.89

(21) Numéro de dépôt: 86401924.5

(22) Date de dépôt: 02.09.86

(51) Int. Cl.⁴: **A01K 91/00,** D04C 1/02
// D07B1/00, D07B1/14

(54) Procédé de fabrication d'un bas de ligne pour la pêche.

(30) Priorité: 02.09.85 ES 546638

(43) Date de publication de la demande:
11.03.87 Bulletin 87/11

(45) Mention de la délivrance du brevet:
28.06.89 Bulletin 89/26

(84) Etats contractants désignés:
DE FR GB IT

(56) Documents cités:
EP-A- 0 138 631
DE-A- 2 808 136
FR-A- 583 214
FR-A- 1 175 719
GB-A- 414 191
US-A- 3 019 592
US-A- 3 451 305

(73) Titulaire: Del Pozo Obeso, Rafael, General Mola 4-4o,
Reinosa (Santander)(ES)

(72) Inventeur: Del Pozo Obeso, Rafael, General Mola 4-4o,
Reinosa (Santander)(ES)

(74) Mandataire: Levy, David et al, c/o S.A.
Fedit-Loriot 38, avenue Hoche, F-75008 Paris(FR)

## Description

La présente invention concerne un procédé de réalisation d'un bas de ligne, du type de ceux utilisés dans la pratique de la pêche à la "mouche", grâce auxquels l'on renforce notablement leurs caractéristiques fonctionnelles.

Dans la demande européenne EP-A-0 138 631, on faisait allusion à la nécessité d'une grande précision du lancer pour la pêche à la truite avec une "mouche", ainsi qu'à la nécessité de lancer à la plus grande distance possible en vue d'accroître les possibilités de surface sur laquelle on peut avoir de l'incidence d'un point ou d'une position déterminée pour le pêcheur.

Dans ladite demande il se précise également que, dans une canne à pêche, le "bas de ligne" constitue l'élément qui, par le fait de son moindre poids et de sa plus grande souplesse, recueille l'impulsion fournie par la ligne et la transmet à son tour au fil du bout et à la mouche ; en conséquence ledit bas de ligne constitue l'élément fondamental étant donné que la fonction et l'efficacité de l'ensemble découlent de la précision du lancer. A cet égard, comme on le sait, le bas de ligne doit avoir un diamètre décroissant vers l'extrémité réceptrice de la pointe et doit être en même temps souple et relativement élastique.

L'objectif fondamental de ladite demande européenne est d'obtenir un bas de ligne présentant ces caractéristiques bien que dépourvu de noeuds et éliminant également des problèmes d'autres bas de ligne connus, comme par exemple la tendance à l'"auto-enroulement".

Conformément à ce qui vient d'être exposé, le bas de ligne décrit dans ladite demande européenne est constitué par une tresse tubulaire en filaments micrométriques, de préférence en Nylon, d'une grande résistance, élasticité et souplesse, avec la particularité qu'en outre ladite tresse adoptait une configuration conique, dépourvue de tout type d'âme intérieure, en partant d'un nombre de fils déterminé à son extrémité initiale correspondant à son plus grand diamètre, en éliminant progressivement et de façon unitaire lesdits fils, c'est-à-dire en réduisant progressivement le nombre de fils faisant partie de la tresse, ce qui se traduisait par une réduction progressive du diamètre du bas de ligne sans que se produisent en pratique des échelonnements étant donné le caractère micrométrique des filaments utilisés dans la configuration de ladite tresse.

De façon plus concrète, on prévoit l'utilisation d'une machine à tresser maintenue à vitesse constante tandis qu'était progressivement réduite la traction exercée sur la tresse résultante, en obtenant de la sorte une augmentation de la densité du tressage au fur et à mesure qui diminue le nombre de fils utilisé dans la réalisation de la tresse, une telle réduction du nombre de fils déterminant le rétrécissement progressif de celle-ci ; le même effet peut être également obtenu en maintenant constante la traction exercée sur la tresse et en variant la vitesse de rotation de la machine à tresser, ou encore en agissant simultanément et de façon combinée sur les deux variables.

Dans la demande européenne, on fait également allusion à la possibilité d'introduire à l'intérieur de la tresse un matériau absorbant, comme par exemple du coton, lorsqu'on désire que le bas de ligne plonge dans l'eau tout en assurant de meilleures performances et une plus grande simplicité d'obtention du bas de ligne au cas où celui-ci serait dépourvu d'une telle âme en matière absorbante.

Dans le brevet US 3 451 305, il est décrit un bas de ligne de pêche comportant une âme constituée par des filaments micrométriques métalliques et plastiques qui sont déposés parallèlement les uns aux autres.

La présente invention concerne un procédé de réalisation d'un bas de ligne de pêche présentant les caractéristiques énoncées dans la revendication 1.

Les perfectionnements proposés par l'invention visent à l'obtention d'un bas de ligne obtenu à partir d'une tresse conique, dépourvu d'âme et cependant susceptible de s'enfoncer dans l'eau, permettant en outre de régler ou préciser la densité ou vitesse d'enfoncement dudit bas de ligne.

L'invention sera mieux comprise à la lecture de la description d'un mode de réalisation donnée ci-dessous à titre indicatif, ainsi que des dessins sur lesquels:

la figure 1 est une vue en élévation du bas de ligne selon un mode de réalisation de la présente invention;

la figure 1A est une vue en perspective, à échelle réduite, d'une bobine d'alimentation des filaments en cuivre et en Nylon torsadés;

la figure 2 est une vue agrandie partielle de la partie extrême gauche du bas de ligne de la figure 1;

la figure 3 est une vue agrandie partielle de la partie centrale gauche du bas de ligne de la figure 1;

la figure 4 est une vue agrandie partielle de la partie centrale droite du bas de ligne de la figure 1;

la figure 5 est une vue agrandie partielle de la partie extrême droite du bas de ligne de la figure 1;

les figures 6 et 7 sont respectivement des sections transversales représentant des extrémités de filaments en Nylon coupés et disposés à l'intérieur du tube creux ;

la figure 8 est une section transversale de la pointe de la tresse ;

la figure 9 est une vue en élévation partielle de la partie supérieure de la tresse du bas de ligne selon la présente invention ;

la figure 10 est une vue en élévation partielle de pointe de la tresse avec un monofilament qui y est inséré ;

la figure 11 est une vue en élévation représentant une autre manière pour terminer la tresse au moyen d'une boucle constituée par une extrémité de la tresse qui est introduite à l'intérieur du tube creux formé par ladite tresse.

Pour ce faire, l'invention vise à remplacer un ou plusieurs des filaments micrométriques en Nylon configurant la tresse, par des filaments également micrométriques d'une matière métallique et souple, dans une proportion appropriée pour accroître la densité du bas de ligne dans son ensemble jusqu'à un niveau préétabli et approprié en fonction de l'utilisation ultérieure de celui-ci.

De façon plus concrète on a choisi le cuivre comme matière métallique qui semble être le plus approprié pour l'obtention de ces filaments, bien que l'on puisse de toute évidence utiliser tout autre métal offrant des performances semblables.

Bien qu'à première vue cette solution pour augmenter la densité du bas de ligne puisse paraître évidente, en pratique il se présente des problèmes importants que l'on n'a pu résoudre qu'à l'issue de recherches approfondies et grâce aux perfectionnements préconisés.

Le simple remplacement sur la machine à tresser de bobines porteuses de filaments en Nylon par des bobines porteuses de filaments en cuivre n'est pas viable car, dans la mesure où le Nylon a un coefficient d'élasticité très élevé et où le cuivre a une élasticité pratiquement nulle, la traction exercée sur la tresse textile configurée détermine le bris instantané des filaments en cuivre et, partant, une totale inefficacité opérationnelle.

En parvenant à régler la force de traction jusqu'à des limites pouvant être supportées par des filaments métalliques, il se produit sur ces derniers, par le fait de leur manque d'élasticité, un effet d'allongement qui est au début parallèle à l'allongement des filaments en Nylon mais qui, après le retrait élastique de ceux-ci, est à l'origine de la formation de nodules de cuivre par accumulation de matériel en excédent, ce qui détermine à son tour l'apparition sur le bas de ligne de renflement impliquant un degré élevé d'irrégularité du tissu et du propre bas de ligne dans son ensemble.

Un autre problème important réside dans le fait que sur les machines à tresser normalement utilisées, le fil est extrait de façon axiale, ce qui ne pose pas de problèmes dans le cas du Nylon mais qui est en revanche à l'origine d'un problème important dans le cas de filaments en cuivre, dans la mesure où, à chaque tour de celui-ci sur la bobine correspondante, il se produit à sa sortie une sorte de "torsion" par le fait de son enroulement hélicoïdal sur la bobine, provoquant un nodule qui affaiblit le filament et provoque nombre de fois sa cassure ou, lorsque le fil ne se casse pas, qui produit des appendices sur la tresse conique faisant que la surface de bas de ligne est irrégulière.

Tous ces problèmes sont résolus de façon satisfaisante grâce aux perfectionnements faisant l'objet de la présente invention.

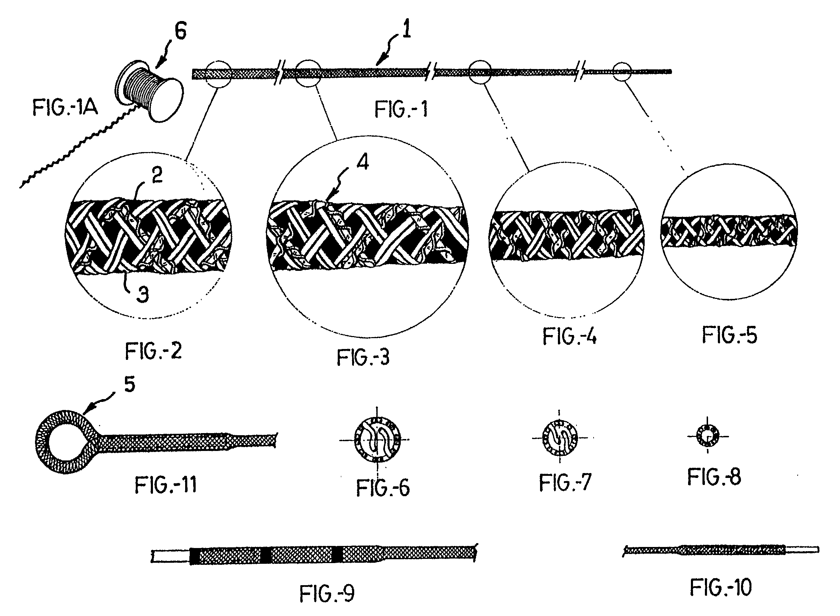

De façon plus concrète et en partant de l'idée de base d'utiliser des filaments micrométriques métalliques pour augmenter la densité d'un bas de ligne 1 (figure 1) obtenu à partir d'une tresse conique, l'un des perfectionnements préconisés est axé sur le fait que l'alimentation de chaque filament métallique 2 ne se réalise pas de façon isolée mais combinée avec un filament en Nylon 3, qui ont été préalablement torsadés si bien que, compte tenu de la nature des matériaux les composant, c'est le cuivre qui s'enroule sur le Nylon, ce dernier supportant substantiellement les efforts de traction, tandis que le premier s'allonge et se raccourcit par le fait de son propre enroulement ou torsion sans subir de déformation et en maintenant une parfaite régularité de sa distribution par rapport au fil de Nylon qui l'accompagne, régularité qui est transmise à son tour à la tresse constituant le bas de ligne.

Il existe en ce sens la possibilité de torsader un seul filament de cuivre 2 avec un seul filament de Nylon 3, ou encore deux filaments de cuivre tressés dans ce cas conjointement avec un filament en Nylon, ou bien un seul filament en cuivre avec lequel sont tressés deux filaments en Nylon.

Pour un bas de ligne normal, où l'on part de 16 ou 32 fils pour finir généralement avec 8 ou 12, en fonction de la densité ou vitesse de plongée prévue pour celui-ci, on peut utiliser une seule torsade combinant par torsion des fils en Nylon ou en cuivre, ou encore deux torsades ou plus aux mêmes caractéristiques, auquel cas de telles torsades, dans l'alimentation de la machine à tresser, sont situées dans des zones équiangulairement distantes pour obtenir la répartition appropriée du matériau métallique sur la tresse conique constituant le bas de ligne.

Pour les bas de ligne réalisés conformément à la présente invention, on utilise des fils en Nylon 3 au diamètre compris entre 0,076 et 0,127 mm, et il est prévu, conformément aux perfectionnements préconisés, de combiner à ces filaments en Nylon des fils micrométriques en cuivre 2 au diamètre compris entre 0,05 et 0,09 mm.

A partir de ces dimensions pour les filaments d'une nature et de l'autre, lorsque la torsade apportée à la configuration de la tresse est constituée par un seul fil en cuivre et un seul fil en Nylon qui sont soumis à une torsion, il est prévu que le nombre de torsions 4 ou de tours fournis à cette paire de fils par chaque centimètre courant, soit compris entre 0,1 et 40, et de préférence entre 0,5 et 15 torsions par centimètre linéaire.

Lorsque ce sont trois fils qui constituent la torsade et sont tressés, on a prévu que lesdits fils soient soumis à un nombre d'entrecroisements ou tresses compris entre 0,5 et 10 par centimètre linéaire, et de préférence entre 2 et 5 par centimètre linéaire.

Il est clair que les marges précitées déterminent que plus le nombre de torsions ou croisements des fils est grand, plus la quantité de cuivre intervenant dans la torsade est grande, et par conséquent, plus la quantité de cuivre intervenant dans le bas de ligne est grande, ce qui implique une plus grande densité ou vitesse de plongée pour ce dernier.

Il convient également de souligner comme une autre des caractéristiques préconisées qu'une extrémité ou les deux, de la tresse constituant le bas de ligne ainsi obtenu peut être repliée à l'intérieur en formant une boucle 5 (figure 11) pour attacher le bout du bas de ligne ou la ligne, bien que ledit bout ou ligne puisse également être collé directement à l'intérieur de la tresse.

En complément de ce qui vient d'être exposé et indépendamment du fait que l'on utilise un filament en cuivre torsadé avec un filament en Nylon, ou que ce soient deux filaments de l'un ou de l'autre matériau qui collaborent avec un filament du matériau complémentaire, le cuivre a été alimenté à partir d'une bobine 6 (figure 1A) de façon radiale, soit que la bobine tourne au fur et à mesure où le cuivre est extrait, au lieu de demeurer statique comme dans les systèmes d'extraction axiale conventionnels, de manière à faire disparaître l'auto-torsion du filament en cuivre se produisant dans ce dernier cas, avec les problèmes en découlant et qui ont été signalés précédemment. Le déroulement du filament de cuivre à partir de la bobine 6 est effectué perpendiculairement à l'axe de rotation de cette dernière.

Soulignons que le fil de cuivre employé est normalement laqué, pour le protéger contre la corrosion, ce qui permet en outre de lui donner la couleur que l'on désire.

## Revendications

1. Procédé de réalisation d'un bas de ligne de pêche, dans lequel on utilise d'une part, des filaments en matière élastique, flexible et d'une haute résistance à la traction, lesdits filaments présentant un diamètre micrométrique et étant utilisés pour la réalisation d'une série de mailles donnant naissance à une tresse en forme de tube creux ayant une configuration conique dans le sens longitudinal, ladite tresse comportant un nombre déterminé de filaments micrométriques décroissant unitairement et progressivement tout au long du bas de ligne, caractérisé en ce que des filaments métalliques micrométriques sont torsadés ou tressés avec des filaments élastiques avant le tressage en forme de tube creux.

2. Procédé selon la revendication 1, caractérisé en ce qu'un fil métallique est torsadé avec un fil élastique.

3. Procédé selon la revendication 2, caractérisé en ce que le nombre de torsades des filaments torsadés est compris entre 0,1 et 40 par centimètre linéaire, et de préférence compris entre 0,5 et 15.

4. Procédé selon la revendication 1, caractérisé en ce qu'un filament métallique est tressé avec deux filaments élastiques.

5. Procédé selon la revendication 1, caractérisé en ce qu'un filament élastique est tressé avec deux filaments métalliques.

6. Procédé selon l'une des revendications 4 ou 6, caractérisé en ce que le nombre de croisements entre les filaments métalliques et élastiques est compris entre 0,5 et 10 par centimètre linéaire.

7. Procédé selon l'une des revendications 1 à 6, caractérisé en ce que le diamètre des filaments élastiques est compris entre 0,076 et 0,127 mm et le diamètre des filaments métalliques est compris entre 0,05 et 0,12 mm.

8. Procédé selon l'une des revendications 1 à 7, caractérisé en ce que les filaments métalliques sont en cuivre.

9. Procédé selon la revendication 8, caractérisé en ce que le cuivre est laqué.

10. Procédé selon l'une des revendications 1 à 8, caractérisé en ce que le filament métallique est extrait à partir d'une bobine entraînée en rotation en même temps que le filament est extrait perpendiculairement à l'axe de rotation de la bobine.

11. Procédé selon l'une des revendications précédentes, caractérisé en ce que la tresse tubulaire conique constituant le bas de ligne présente au moins une torsade porteuse d'au moins un filament métallique, le nombre de torsades étant fonction de la densité requise pour le bas de ligne, lesdites torsades étant réparties de façon équidistante sur le pourtour de ladite tresse tubulaire.

## Patentansprüche

1. Verfahren zur Herstellung eines Vorfaches einer Angelschnur, bei dem einerseits aus elastischem Material bestehende, flexible und eine hohe Zugfestigkeit aufweisende Fäden verwendet werden, die einen im Mikrometerbereich liegenden Durchmesser aufweisen und zur Herstellung einer Reihe von Maschen verwendet werden, die ein Geflecht in Form eines Hohlrohres entstehen lassen, das eine konische Form in Längsrichtung aufweist, wobei das Geflecht eine vorgegebene Anzahl von einen Durchmesser im Mikrometerbereich aufweisenden Fäden umfaßt, die einheitlich und fortschreitend über die gesamte Länge des Vorfaches abnimmt, dadurch gekennzeichnet, daß einen Durchmesser im Mikrometerbereich aufweisende Metalldrähte mit den elastischen Fäden vor der Geflechtbildung in Form des Hohlrohres verdrillt oder verflochten werden.

2. Verfahren nach Anspruch 1, dadurch gekennzeichnet, daß ein Metalldraht mit einem elastischen Faden verdrillt wird.

3. Verfahren nach Anspruch 1, dadurch gekennzeichnet, daß die Anzahl der Verdrillungen der verdrillten Fäden und Drähte zwischen 0,1 und 40 pro linearem Zentimeter, und vorzugsweise zwischen 0,5 und 15 liegt.

4. Verfahren nach Anspruch 1, dadurch gekennzeichnet, daß ein Metalldraht mit zwei elastischen Fäden verflochten ist.

5. Verfahren nach Anspruch 1, dadurch gekennzeichnet, daß ein elastischer Faden mit zwei Metalldrähten verflochten ist.

6. Verfahren nach Anspruch 4 oder 5, dadurch gekennzeichnet, daß die Anzahl der Kreuzungspunkte zwischen den Metalldrähten und den elastischen Fäden zwischen 0,5 und 10 pro linearem Zentimeter liegt.

7. Verfahren nach einem der Ansprüche 1 bis 6, dadurch gekennzeichnet, daß der Durchmesser der elastischen Fäden zwischen 0,076 und 0,127 mm liegt und daß der Durchmesser der Metalldrähte zwischen 0,05 und 0,12 mm liegt.

8. Verfahren nach einem der Ansprüche 1 bis 7, dadurch gekennzeichnet, daß die Metalldrähte aus Kupfer bestehen.

9. Verfahren nach Anspruch 8, dadurch gekennzeichnet, daß das Kupfer lackiert ist.

10. Verfahren nach einem der Ansprüche 1 bis 8, dadurch gekennzeichnet, daß der Metalldraht von einer Spule abgezogen wird, die in Drehung angetrieben wird, während gleichzeitig der Draht senkrecht zur Drehachse der Spule abgezogen wird.

11. Verfahren nach einem der vorhergehenden Ansprüche, dadurch gekennzeichnet, daß das das Vorfach bildende rohrförmige konische Geflecht zumindestens ein verdrilltes Element aufweist, das zumindestens einen Metalldraht trägt, und daß die Anzahl der verdrillten Elemente eine Funktion der für das Vorfach gewünschten Dichte ist, wobei die verdrillten Elemente unter gleichen Abständen über den Umriß des rohrförmigen Geflechtes verteilt sind.

**Claims**

1. A method of manufacturing a fishing line stocking, using on the one hand filaments of an elastic, flexible material with high traction strengh, the filaments having a micrometric diameter and being used for manufacturing a series of stitches, giving rise to a braid in the form of a hollow tube with a conical form in the longitudinal direction, the said braid comprising a specified number of micrometric filaments decreasing progressively one by one along the length of the line stocking, characterised in that micrometric metal filaments are twined or braided with elastic filaments before being braided into a hollow tube.

2. A methode according to claim 1, characterised in that one metal thread in twined with an elastic thread.

3. A methode according to claim 2, characterised in that the number of twists of the twined filaments is between 0.1 and 40 per linear centimetre, and preferably between 0.5 and 15.

4. A methode according to claim 1, characterised in that one metal filament is braided with two elastic filaments.

5. A method according to claim 1, characterised in that one elastic filament is braided with two metal filaments.

6. A method according to one of claims 4 or 5, characterised in that the number of intertwinings between the metal filaments and the elastic filaments is between 0.5 and 10 per linear centimetre.

7. A method according to one of claims 1 to 6, characterised in that the diameter of the elastic filaments is between 0.076 and 0.127 mm and the diameter of the metal filaments is between 0.05 and 0.12 mm.

8. A method according to one of claims 1 to 7, characterised in that the metal filaments are made of copper.

9. A method according to claim 8, characterised in that the copper is lacquered.

10. A method according to one of claims 1 to 8, characterised in that the metal filament is unwound from a reel driven in rotation simultaneously with the unwinding of the filament perpendicular to the axis of rotation of the reel.

11. A method according to one of the preceding claims, characterised in that the tubular conical braid forming the line stocking has at least one twine carrying at least one metal filament, the number of twines being related to the required density for the line stocking, the said twines being distributed in an equidistant manner over the circumference of the tubular braid.

FIG.-1A

FIG.-1

6

1

2

3

FIG.-2

4

FIG.-3

FIG.-4

FIG.-5

5

FIG.-11

FIG.-6

FIG.-7

FIG.-8

FIG.-9

FIG.-10

EP 0 214 060 B1